# EUROPEAN PATENT SPECIFICATION

(11) **EP 3 641 555 B1**
(45) Date of publication and mention of the grant of the patent: **29.05.2024**
(21) Application number: 18735486.5
(22) Date of filing: 22.06.2018
(51) Int. Cl.: A23G 1/00, A23L 2/39, A23G 1/30, A23G 1/32, A23G 1/56

(54) **HIGH IMPACT COCOA POWDER**
ALKALISIERTE KAKAOPULVER
POUDRE DE CACAO ALCALINE

(30) Priority: 22.06.2017 EP 17177464
(43) Date of publication of application: 29.04.2020
(73) Proprietor: Cargill, Incorporated, Wayzata, MN 55391 (US)
(72) Inventor: KRUITHOF, Stephan, 1521 XP Wormerveer (NL); UITERKAMP, Vincent Schoot, 2024 GP Haarlem (NL); VAN IERSEL, Jan Pieter Hubert, 2012 GE Haarlem (NL)
(74) Representative: Dottridge, Cass A.C.
(86) International application number: PCT/US2018/038897
(87) International publication number: WO 2018/237215

(56) References cited:
- EP-A1- 2 241 190
- EP-B1- 2 068 641
- JP-A- H0 698 681
- US-A- 4 435 436
- US-A- 4 784 866
- US-A- 5 009 917
- US-A- 5 114 730
- Nathalie De Clercq: "Changing the functionality of cocoa butter", , 28 September 2011 (2011-09-28), pages 1-220, XP055556051, Ghent, Belgium DOI: 10.1366/0003702011953829 ISBN: 978-90-59-89470-9 Retrieved from the Internet: URL:https://biblio.ugent.be/publication/19 09786/file/4335709.pdf [retrieved on 2019-02-13]
- Dyer B: "Alkalized Cocoa Powders", 57th PMCA Production Conference, 1 January 2003 (2003-01-01), XP055789095, Retrieved from the Internet: URL:https://www.blommer.com/_documents/alk alized-cocoa-powders-article.pdf [retrieved on 2021-03-23]
- FISCHER J: "Cocoa processing - cleaning through roasting", MANUFACTURING CONFECTIONER, MANUFACTURING CONFECTIONER PUBLISHING COMPANY, US, vol. 89, no. 9, 1 September 2009 (2009-09-01), pages 89-93, XP008118532, ISSN: 0025-2573

## Description

### FIELD OF THE INVENTION

The present invention relates to a method of producing alkalized cocoa materials. The invention also relates to materials, in particular high impact cocoa powders, obtainable by this method.

### BACKGROUND OF THE INVENTION

Processing of cocoa beans typically involves one or more standard steps including, for example, fermentation, de -hulling, and roasting. A de -hulled cocoa bean is called a cocoa nib. Nibs are crushed to produce cocoa liquor which, in turn, may be pressed to produce cocoa butter and a cocoa cake (or press-cake). The cake may then be ground into cocoa powder. The color and flavor of cocoa powder may be adjusted through alkalization - the process of heating cocoa nibs in the presence of an alkalizing agent - resulting in alkalized or "dutched" cocoa powder. Alkalized cocoa powders are typically darker than their equivalent non-alkalized powders.

The color of cocoa powders can be expressed using the Hunter color coordinate scale or CIE 1976 (CIELAB) color system which uses three coordinates (or values) to define a powder' s color profile. The L coordinate represents brightness and can assume values between 0 (for black) and 100 (for white); the a value represents the red component (a>0); and the b value represents the yellow component (b>0). The L value for non-alkalized cocoa powders is typically 20 or more; for slightly alkalized powders, it goes down to between 16 and 20; and for highly alkalized powders, it tends to be between 13 and 16. The alkalization process, and variations thereof, are described in United States Patent Nos. 4,435,436, 4,784,866 and 5,009,917, and in European Patent No. 2068641.

US Patent No. 4,435,436, describes a process for producing an alkalized cocoa powder by mixing standard cocoa powder (pH = 5.75) with potassium hydroxide in a double- walled Z-kneader and kneading the mixture at about 75 °C, with periodic addition of moisture, until a pH of 7.3 is obtained. The resulting powder, once dried, has an L value of between 9.0 and 14.0, an a value of between 4.0 and 8.0, and a b value of between 2.0 and 6.0.

US Patent No. 4,784,866 describes the production of red cocoa powders by alkalization in an enclosed vessel, without evaporation, under a pressure of 1-3 atmospheres (about 1-3 bar) and at a temperature below 110°C. During (and for at least part of) the reaction, an oxygen-containing gas is introduced into the reaction vessel. According to the Examples, the resulting cocoa powders have an L value of 25.83, an a value of 15.18 and a b value of 10.95.

US Patent No. 5,009,917 describes a process for producing alkalized cocoa powder, where alkalization is performed on the cocoa press-cake at 150-300°F (65-150°C), and 10 to 200 psi (0.7-13.8 bar), for 5-180min. During alkalization, the reactor is vented and oxygen-containing gas is fed into the reactor. The resulting cocoa powders have an L value of 15.5 or below and an a/b value (representative of redness) of more than 1.6.

European Patent No. 2068641 describes an alkalization process in which air flow is minimized and essentially no steam is added into the alkalization mixture. The resulting cocoa powder has an L value of less than 16, a C value above 20, and H value of between 35-55, and a pH greater than 7.0.

Current commercial demands require a cocoa powder manufacturer to produce cocoa powder in a broad palette of colors. There is still a need, in the market, for high impact alkalized cocoa powders with both a desirable color profile, and a less alkaline, more desirable flavor profile.

US 4435436 A refers to an alkalized cocoa powder with a pH of 7.3, color coordinates L of 12, a of 6.8 and b of 3.8 and an ash content of 10.8 wt %.

US 4784866 A refers to an alkalized cocoa mass with a pH of 7.2, color coordinates L of 2.06, a of 5.59 and b of 3.23.

US 5009917 A refers to a method or producing an alkalized cocoa powder.

EP 2068641 refers to alkalized cocoa powders with a L-value of less than 12 and pH of less than 8.0.

EP 2241190 refers to a method of producing alkalized cocoa powder.

US 5114730 A refers to a process for making dark cocoa from cocoa powder.

JP H06 98681 A refers to a process for making alkalized cocoa powder.

### STATEMENTS OF THE INVENTION

The invention is as defined in the claims, and any disclosure which does not fall within the scope of the claims is included for illustrative purposes.

In one aspect of the present invention, there is provided a method of producing an alkalized cocoa material, the method comprising the steps of: (a) mixing a cocoa material selected from cocoa beans, cocoa nibs, and mixtures thereof, an alkalizing agent, and water to a total moisture content of 10 to 35 % by weight; and (b) reacting the mixture of step (a) at a pressure of up to 12 bar and a temperature of 85 to 180°C, for 10 to 500 min; wherein step (b) is performed under continuous air flow of between 250 and 2000 ml/min/kg of cocoa material. Preferably, the alkalized cocoa material obtained in step (b) is pressed to produce cocoa butter and a cocoa cake which may, in turn, be ground to produce high-impact alkalized cocoa powder.

In another aspect of the present invention, there is provided an alkalized cocoa powder obtainable according to the above method, having an L value of 9 or less, a pH of less than 7.0 and an ash content of 14 % FFDM or less. It advantageously has an a- value preferably in the range of 2.0 to 7.0 and a b- value preferably in the range of 1.0 to 7.0.

In yet another aspect not according to the claimed invention, there is provided a cocoa butter obtainable according to the above method, characterized in that it has a soap content of less than 1000 ppm.

Further aspects of the present invention are recited below and in the claims attached hereto.

### DETAILED DESCRIPTION

The present invention provides a method of producing an alkalized cocoa material, comprising the steps of: (a) mixing a cocoa material selected from cocoa beans, cocoa nibs, and mixtures thereof, an alkalizing agent, and water to a total moisture content of 10 to 35 % by weight; and (b) reacting the mixture of step (a) at a pressure of up to 12 bar and a temperature of 85 to 180°C, for 10 to 500 min; wherein step (b) is performed and under continuous air flow of between 250 and 2000 ml/min/kg of cocoa materials.

The cocoa material used in step (a) is selected from cocoa beans, cocoa nibs, or a mixture thereof. Prior to use, the beans or nibs may be fermented, sterilized, roasted, or any combination thereof. Preferably, the cocoa material used in step (a) will be cocoa beans or cocoa nibs that have not be sterilized or roasted. Advantageously, the method of the present invention does not require the cocoa material to be ground, milled or pressed prior to alkalization. Thus, unlike typical alkalization methods, it is preferably not performed on cocoa liquor/cocoa cake or cocoa powder.

The cocoa material is mixed with an alkalizing agent. Alkalizing agents suitable for use in the production of dutched cocoa powders will be well known to a person skilled in the art. By way of example, they may be selected from the group consisting of: potassium hydroxide, potassium carbonate (potash), magnesium hydroxide, magnesium carbonate, ammonium hydroxide, ammonium bicarbonate and mixtures of two or more thereof. Ideally, the alkalizing agent used in the method of the present invention will be potash. The amount of alkalizing agent to be added will depend on the desired effect to be achieved (e.g. color and flavor), and on the other processing parameters being used. It will readily be determined by a person skilled in the art. Preferably, the alkalizing agent will be added, typically in a 50% by weight solution, in an amount of 1-10% by weight, more preferably 4-8% by weight, more preferably 5-7% by weight, based on the weight of cocoa material.

A certain amount of water is also added to the mixture of step (a), either before, after, or simultaneously with the alkalizing agent. The water will be added to a total moisture content of up 10 to 35% by weight.

Alkalization is preferably performed in a pressure vessel reactor or a closed vessel reactor. It is performed at a pressure of up to 12 bars and at a temperature of 85 °C, and up to 180°C. Preferably, it will be performed at a pressure of 5-10 bars, more preferably at a pressure of 5-7 bars, more preferably at a pressure of about 6 bars. The nibs will be heated to a temperature preferably in the range of 90-180°C. Preferably, the nibs will be heated to a temperature of 100-160°C, more preferably of 120-150°C. Thus, the reaction or alkalization temperature refers to the target temperature of the cocoa material, and is measured as the average temperature of the cocoa material once a stable temperature has been reached. The cocoa material may be heated using any means available to the skilled person. For example, they may be heated by the injection, into the reactor, of hot air or steam, and/or through contact heating, e.g. with heated reactor walls. The cocoa material may also be pre-heated before it is introduced into the reactor, allowing it to reach an initial temperature that is then maintained or increased by heating in the reactor.

Typically, the alkalization reaction will be performed under continuous stirring. It will also be performed under continuous airflow. By "continuous airflow" it is meant that air, or any other suitable gas (e.g. oxygen-enriched air or nitrogen), is able to enter and exit the reactor substantially for the duration of the reaction (i.e. from the point of addition of the alkalizing agent), and preferably at a substantially constant rate. Airflow will be expressed in ml/min per kg of cocoa material (ml/min/kg).The airflow is between 250 and 2000 ml/min/kg. Interestingly, it has been found that the specific flow rate can impact final product color. Thus, without wishing to be bound by theory, it is believed that a lower airflow rate (especially when combined with a lower alkalization time and temperature) will result in a more red/brown color, while a higher flow rate will result in a more black/grey color. The exact rate will be determined by the skilled person accordingly.

The alkalization step, which begins as soon as the alkalizing agent is added to the cocoa material, will be allowed to continue for 10 min to 500 min. Preferably, it will be 15 to 300 min, more preferably 30 to 200 min, more preferably 45 to 120 min, more preferably 60 to 90 min. Once alkalization has been completed, the reaction may be stopped (i.e. airflow is interrupted, the reactor depressurized (to atmospheric pressure), and the cocoa material recovered from the reactor).

The method of the present invention may include one or more additional steps. These may be performed before, simultaneously with, or after alkalization of the cocoa material, and may include a sterilization step and/or a roasting step.

Sterilization will preferably be achieved by heating the cocoa material, with steam, hot air, or through contact heating for example, to about 100°C (i.e. to 95-105°C) for up to one hour, preferably for 20 to 30 minutes. Preferably, the cocoa material will be heated for essentially only enough time, and at as low a temperature as possible in order to sterilize the beans sufficiently for further processing, that is to meet minimal manufacturing standards for sterility. For example, sterilization may be performed simultaneously with, and using the heat of, the alkalization reaction. If used, roasting will preferably be performed by heating the beans/nibs to 100 to 125 °C until they are dry, i.e. for about 60 min. Roasting will preferably be performed after step (b), i.e. after alkalization has been completed.

If beans are used as the starting material in step (a), the method may also include a de-shelling or de-hulling step such that the shells are substantially removed. It is accepted in the art that no de-shelling process is 100% efficient and, as such, a small amount of shell may remain, within commercially acceptable tolerances. The beans may also be broken and/or winnowed. De-shelling, breaking and/or winnowing of the beans will preferably occur prior to alkalization (i.e. before step (a)).

The alkalized material obtained by the method of the present invention may then be further processed to obtain a desired end product. This may be selected, for example, from cocoa liquor, cocoa powder, or cocoa butter. Alkalized nibs may indeed be crushed to obtain a cocoa liquor. The cocoa liquor may then be pressed to extract cocoa butter, leaving a substantially defatted cocoa cake. The cocoa cake may then be ground to produce cocoa powder. Thus, cocoa liquor, cocoa butter and cocoa powder obtainable according to the method described herein are also part of the present invention.

The cocoa powder may be of any type known to the skilled person. For instance, it may be a high-fat cocoa powder, with more than 12%, typically about 20-25%, cocoa butter by weight, a standard cocoa butter, with 10-12% cocoa butter by weight, or a low-fat or fat-free cocoa butter, with less than 10% cocoa butter or less than 2% cocoa butter by weight, respectively. Regardless of fat content, it will be a high-impact cocoa powder.

The term "high impact" is used herein to refer to cocoa powders with a dark color. High impact cocoa powders can be used on their own or mixed with other cocoa powders to produce food and beverage products with tailored color and flavor profiles. Advantageously, high impact cocoa powders can also be used to decrease costs or increase margins, since smaller quantities can be used to achieve the same color impact as larger quantities of standard cocoa powders.

The cocoa powder of the present invention has an L value of 9 or less, indicative of a very dark color. More preferably, the L value will be of 7 or less. For example, the cocoa powder of the present invention may have an L value of 1 to 6, preferably of 2 to 5, more preferably of 3 to 4. It will advantageously have an a value of 2.0 to 7.0, preferably of 2.0 to 6.0, more preferably of 3.0 to 6.0, more preferably of 3. 5 to 5.5; and a b value of 1.0 to 7.0, preferably of 1.5 to 6.5, more preferably of 2.0 to 5.0. The cocoa powder of the invention will preferably have an a/b value of 0.3 to 5.0, preferably of 0.5 to 3.0, more preferably of 0.7 to 2.0, more preferably of 0.8 to 1.7.

Unfortunately, to produce true high impact cocoa powders, the degree of alkalization typically required results in a high pH and an undesirable, alkaline flavor profile. Advantageously, with the method of the present invention, it is possible to produce high impact cocoa powders with much lower alkalinity. Thus, the cocoa powders of the present invention have a pH of less than 7.0, more preferably of less than 6.5. For example, they may have a pH in the range of 3.0 to 6.0, more preferably in the range of 4.0 to 5.0.

In a further advantage, the cocoa powders of the present invention have a low ash content, lower than traditional alkalized or high impact cocoa powders. They will preferably have an ash content of less than 14% FFDM, more preferably of 10 to 14% FFDM, more preferably of 12 to 13% FFDM.

In addition to cocoa powder, the method of the present invention may also be used to produce cocoa butter. It has surprisingly been found that cocoa butter produced according to the method of the present invention has a soap content of less than 1000 ppm, preferably of less than 750 ppm, more preferably of less than 550 ppm. Advantageously, and without wishing to be bound by theory, it is believed that this may result in better (more rapid) crystallization compared to cocoa butters obtained from traditional dutched cocoa.

Advantageously, the improved alkalized cocoa materials of the present invention can be used like any other cocoa materials in the manufacture of food and beverage compositions. These may include, by way of illustration only, milk, dark, and white chocolate and compound compositions (for use, amongst others, in confectionary, as bars, in truffles and pralines, or as inclusions, coatings, or fillings), drinking chocolate, flavored milks (dairy and non-dairy), flavored syrups, bakery products (such as cakes, cookies and pies), diet bars and meal substitutes, sports and infant nutrition, ice-cream products, dairy products, puddings, mousses, sauces, and breakfast cereals.

Various embodiment of the present invention will now be described by way of the following examples which are provided for illustration purposes only and are not intended to be limiting.

### Examples 1-2, wherein example 2 is a comparative example

Alkalized cocoa powders according to the invention were prepared by following the method specified below and in Table 1.

An IKA Conical Dryer CD 10/07-6365 was preheated by activation of a heating element oil bath (Grant TXF200). Once the pre-heat temperature was reached, 1500 grams broken and de-shelled cocoa nibs were added. Stirring was then initiated (speed range 1-10) and 180 grams pre-heated tap water was added. The nib/water mixture was stirred for a set preheating time (see Table 1). A 1:1 potassium carbonate solution (from Boom b.v.) was then added, followed by alkalization water (tap water). The system was then closed and pressurized using compressed air. The alkalizing temperature was set by adjusting the temperature of the oil bath and air flow was set by adjusting the air regulator (mass-stream mass flow meter/controller made by M+W instrumental).

The nibs were continuously stirred throughout the reaction. Once the alkalization time had elapsed, pressure was removed from the IKA dryer and the cocoa nibs were dried on a plate in a dry air stove (Memmert UFB400) for 60 minutes at 150°C. The nibs were then ground for 6 minutes using an IKA universal mill (M20), and the resulting cocoa liquor pressed with a Caotech CAO-CP1 using a 4 step sequence. The remaining cake was removed from the press, broken into smaller pieces using a hammer, and ground in a Retsch ZM-200 mill using a 0.5mm sieve with a rotor speed of 14000rpm.

**Table 1**

| | Example 1 | Example 2 |
|---|---|---|
| | | |
| Cocoa nibs | 1500 grams | 1500 grams |
| Pre-heat water | 180 grams | 180 grams |
| Pre-heat temperature | 90°C | 90°C |
| Pre heat time | 50 minutes | 50 minutes |
| | | |
| Potassium carbonate solution (50% w/w) | 87.75 grams | 136.44 grams |
| Alkalization water | 225 grams | 225 grams |
| Pressure | 6 bar | 6 bar |
| Air flow | 1000 ml/min | 100 ml/min |
| Alkalization temperature | 130°C | 135°C |
| Alkalization time | 240 minutes | 120 minutes |

In order to measure color, 5.00 ±0.01 grams of the obtained cocoa powder were mixed with 15.0ml tap water at 50°C and stirred until no more clumps were visible. The mixture was then allowed to stand for 15 minutes in order for it to cool to room temperature. The mixture was then stirred once more and poured into an optically neutral petri dish. L, a and b- values were then immediately measured on a calibrated spectrophotometer (Hunterlab Colorflex EZ) using a Illuminant C and 2° standard observer. The results are shown in Table 2.

In order to measure pH, 10.00 ± 0.01 grams of the obtained cocoa powder were mixed with 90.0 ml demineralized water and stirred until no lumps were visible. The mixture was then allowed to settle for 10 minutes before measuring pH with a calibrated pH meter (Methrom 827 phlab). The results are shown in Table 2

**Table 2**

| | Example 1 | Example 2 |
|---|---|---|
| pH | 5.89 | 7.61 |
| L | 8.16 | 8.43 |
| a | 3.58 | 3.60 |
| b | 3.00 | 2.84 |
| a/b | 1.19 | 1.27 |

## Claims

1. A method of producing an alkalized cocoa material, comprising the steps of:
(a) mixing a cocoa material selected from cocoa beans, cocoa nibs, and mixtures thereof, an alkalizing agent, and water to a total moisture content of 10 to 35 % by weight; and
(b) reacting the mixture of step (a) at a pressure of up to 12 bar and a temperature of 85 to 180°C, for 10 to 500 min;
wherein step (b) is performed under continuous air flow of between 250 and 2000 ml/min/kg of cocoa material.

2. A method according to claim 1, **characterized in that** the alkalizing agent is selected from the group consisting of: potassium hydroxide, potassium carbonate (potash), magnesium hydroxide, magnesium carbonate, ammonium hydroxide, ammonium bicarbonate and mixtures of two or more thereof.

3. A method according to any one of the preceding claims, **characterized in that** the alkalizing agent is added in an amount of 1-10% by weight of the cocoa material.

4. A method according to any one of the preceding claims, further comprising the step of processing the alkalized cocoa material obtained in step (b) into cocoa powder.

5. An alkalized cocoa powder, having an L value of 9 or less, a pH of less than 7.0 and an ash content of 14 % FFDM or less.

6. An alkalized cocoa powder according to claim 5, **characterized in that** it has an a-value of 2.0 to 7.0.

7. An alkalized cocoa powder according to claim 5 or 6, **characterized in that** it has b value of 1.0 to 7.0.

## Patentansprüche

1. Verfahren zum Herstellen eines alkalisierten Kakaomaterials, umfassend die Schritte:
(a) Mischen eines Kakaomaterials, das aus Kakaobohnen, Kakaonibs und Mischungen davon ausgewählt ist, eines Alkalisierungsmittels und Wasser auf einen Gesamtfeuchtigkeitsgehalt von 10 bis 35 Gew.-%; und
(b) Umsetzen der Mischung von Schritt (a) bei einem Druck von bis zu 12 bar und einer Temperatur von 85 bis 180 °C für 10 bis 500 min;
wobei Schritt (b) unter kontinuierlichem Luftstrom zwischen 250 und 2000 ml/min/kg Kakaomaterial durchgeführt wird.

2. Verfahren nach Anspruch 1, **dadurch gekennzeichnet, dass** das Alkalisierungsmittel aus der Gruppe ausgewählt ist, bestehend aus:
Kaliumhydroxid, Kaliumcarbonat (Kali), Magnesiumhydroxid, Magnesiumcarbonat, Ammoniumhydroxid, Ammoniumbicarbonat und Mischungen aus zwei oder mehr davon.

3. Verfahren nach einem der vorstehenden Ansprüche,
**dadurch gekennzeichnet, dass** das Alkalisierungsmittel in einer Menge von 1 bis 10 Gew.-% des Kakaomaterials zugegeben wird.

4. Verfahren nach einem der vorstehenden Ansprüche, ferner umfassend den Schritt eines Verarbeitens des in Schritt (b) erhaltenen alkalisierten Kakaomaterials in Kakaopulver.

5. Alkalisches Kakaopulver, das einen L-Wert von 9 oder weniger, einen pH-Wert von weniger als 7,0 und einen Aschegehalt von 14 % FFDM oder weniger aufweist.

6. Alkalisiertes Kakaopulver nach Anspruch 5,
**dadurch gekennzeichnet, dass** es einen a-Wert von 2,0 bis 7,0 aufweist.

7. Alkalisiertes Kakaopulver nach Anspruch 5 oder 6,
**dadurch gekennzeichnet, dass** es einen b-Wert von 1,0 bis 7,0 aufweist.

## Revendications

1. Procédé de production d'un matériau de cacao alcalinisé, comprenant les étapes suivantes :
(a) le mélange d'un matériau de cacao choisi parmi des fèves de cacao, des éclats de cacao, et des mélanges de ceux-ci, un agent alcalinisant et de l'eau à une teneur totale en humidité de 10 à 35 % en poids ; et
(b) la réaction du mélange de l'étape (a) à une pression allant jusqu'à 12 bars et une température allant de 85 à 180 °C, pendant 10 à 500 min ;
dans lequel l'étape (b) est effectuée sous un flux d'air continu compris entre 250 et 2000 ml/min/kg de matériau de cacao.

2. Procédé selon la revendication 1, **caractérisé en ce que** l'agent alcalinisant est choisi dans le groupe constitué : d'hydroxyde de potassium, de carbonate de potassium (potasse), d'hydroxyde de magnésium, de carbonate de magnésium, d'hydroxyde d'ammonium, de bicarbonate d'ammonium et des mélanges de deux ou plusieurs de ceux-ci.

3. Procédé selon l'une quelconque des revendications précédentes,
**caractérisé en ce que** l'agent alcalinisant est ajouté en une quantité de 1 à 10 % en poids du matériau de cacao.

4. Procédé selon l'une quelconque des revendications précédentes, comprenant en outre l'étape de traitement du matériau de cacao alcalinisé obtenu à l'étape (b) en poudre de cacao.

5. Poudre de cacao alcalinisée, ayant une valeur L de 9 ou moins, un pH inférieur à 7,0 et une teneur en cendres de 14 % FFDM ou inférieur.

6. Poudre de cacao alcalinisée selon la revendication 5,
**caractérisée en ce qu'**elle a une valeur allant de 2,0 à 7,0.

7. Poudre de cacao alcalinisée selon la revendication 5 ou 6,
**caractérisée en ce qu'**elle a une valeur b allant de 1,0 à 7,0.
